# EUROPEAN PATENT APPLICATION

(11) **EP 1 286 527 A1**
(43) Date of publication of application: **26.02.2003**
(21) Application number: 01410107.5
(22) Date of filing: 21.08.2001
(51) Int. Cl.: H04M 7/00

(54) **A telecommunications system and a method of selecting call attributes**

(71) Applicant: Hewlett-Packard Company, A Delaware Corporation, Palo Alto, CA 94304 (US)
(72) Inventor: Pedersen, Claus, 38610 Venon (FR)
(74) Representative: Lloyd, Richard Graham (GB)

(57) **Abstract**

A telecommunications system having network elements arranged so as to provide a user of the system with a choice of a plurality of call attributes, the elements including a call attribute variation element whereby the user, during a call, is able to vary the attributes thereof.

## Description

### Background to and Field of the Invention

This invention relates, in broad terms, to a telecommunications system and to a method of selecting call attributes, whereby the quality of the call may be varied.

In particular, although by no means exclusively, the invention relates to a system and method by which call parties are given greater control over certain call characteristics- such as quality and cost - than has hitherto been the case.

As is well known, the field of telecommunications has been the subject of many advances in recent times, with an important growth area being that of so-called "Internet telephony" which uses existing IP network infrastructures to transmit- at no or little cost to the user - voice or data calls which would otherwise be made using the more conventional PSTN communications systems.

Although Internet telephony (also known as IP telephony) has improved considerably over recent years, the cost advantages that it offers continue to be offset by disappointing levels of call quality, a principal cause of which being the packet-based data transmission protocols which they employ. As will be readily understood by those well versed in the relevant art, transmitting call data as discrete packets, and ensuring that the data packets arrive - and are decoded - in the same order that they are dispatched and encoded, is technically complex, and variable and unpredictable delays, or "jitter", associated with such data packets can give rise to a poor calling experience. Moreover, as some IP telephony networks use the public Internet as their infrastructure "backbone", the bandwidth available over the network at certain times can be seriously restricted, meaning that call quality can suffer even more during such peak demand periods.

In contrast, the Public Switched Telephone Network (PSTN) operates by allocating sufficient bandwidth to a call, creating a "virtual circuit", so that, once a call has been set up, the call parties enjoy the exclusive use of a dedicated and uninterrupted call connection which offers a higher quality of call, albeit usually at greater cost. However, despite the superior quality of PSTN call connections, they are considerably less efficient, since "dead" call time (when neither party is speaking) goes to waste, as the virtual circuit cannot be used for the benefit of any other user of the telecommunications system.

Many large telecommunications service providers own both IP/Packet based networks as well as standard PSTN technology.

WO 00/18094 (Efusion, Inc) discloses a method and apparatus for connecting an incoming call to a computer system, wherein a server, resident in a PSTN system, is provided to determine whether the PSTN extension to which the computer is linked is "free" (i.e. able to receive the incoming call) or whether it is currently being used to connect the computer to an Internet facility such as an ISP.

Attempts have also been made to provide automated systems that improve the quality of IP telephony-based calls, by routing the packet-based calls across the public Internet in a manner that avoids Internet congestion. The "BestValue routing" (TM) technology of ITXC Corporation (www.itxc.com) is a particularly pertinent example of such proposals.

However, these systems do little to offer telecommunications users in general much choice in relation to the way in which the quality of voice and data calls can be modified.

It is therefore an object of the present invention to provide a telecommunications system that overcomes or at least reduces these and other drawbacks. It is also an object of the present invention to provide a method of selecting call attributes, whereby the quality and other characteristics of the call may be varied.

### Summary of the Invention

In accordance with a first aspect of the present invention, there is provided a telecommunications system having network elements arranged so as to provide a user of the system with a choice of a plurality of call attributes, the elements including a call attribute variation element whereby the user, during a call, is able to vary the attributes thereof.

This, as will be appreciated, differs substantially from prior approaches, in that dynamic (i.e. "in-call") attribute variation can be effected by call parties.

The call attribute variation element may be operative, in response to a user command, to vary the quality of the call, as perceived by a party to the call.

The quality may be varied by re-routing the call.

Preferably, the system comprises a network monitoring arrangement operative to monitor the quality of service being provided by at least some of the network elements and wherein the call attribute variation element is operative to re-route a call using network elements identified by the monitoring arrangement as having more available bandwidth than those currently being used to sustain the call.

The quality may be varied by changing the number of switches that are used to connect the call parties.

In addition or as an alternative, the quality may be varied by changing the nature of the transmission links that are used to connect the call parties.

The call attributes may be varied by selectively employing packet-based or switched network elements for all or part of the call route.

The packet-based network elements may be IP telephony network elements such as routers. Conveniently, a plurality of different or differently configured IP telephony network elements are provided, whereby different network performance levels may be selected by the user.

Conveniently, therefore, different "QoS" (Quality of Service) levels may be selected by the user.

The QoS levels may be determined and/or measured using call characteristics such as the rate of data transmission, transmission error occurrence, error correction levels, network latency, signal jitter, noise reduction levels and packet order integrity.

The telecommunications system may comprise a billing element operative to bill users for calls made using the network, wherein the call attribute variation element, in response to a user command, causes information relating to the attributes thus selected to be conveyed to the billing element.

In this way, users may be billed for calls in accordance with their call attribute selections: thus, where a user has made a relatively high quality call, a greater charge may be made for that call than would have been the case had the user opted for a lower level of call quality.

Variation of the call attributes may be effected by generating instruction signals and transmitting the signals towards the call attribute variation element.

Preferably, the instruction signals are audio signals, conveniently comprising DTMF tones, although other audio signals such as those generated using a human voice may be also used.

The attributes may be varied by the caller and/or a callee.

In accordance with a second aspect of the present invention, there is provided a telecommunications system having both packed-based and switched network elements and a call attribute variation element whereby a user of the system, during a call, may vary the attributes of the call by causing the system to use the packet-based or switched network elements to route the call, as appropriate.

The call attribute variation element may be responsive to audio signals generated by the user, or generated in accordance with user actions.

Conveniently, the audio signals comprises DTMF tones.

The network may use SS7 network signalling, and user commands may be dispatched to a Service Control Point (SCP).

The telecommunications system may comprise a billing element operative to bill users for calls made using the network, wherein the call attribute variation clement, in response to a user command, causes information relating to the attributes thus selected to be conveyed to the billing element.

Preferably, the call attribute variation element is provided by or associated with the SCP. Similarly, the billing element may be provided by or associated with the SCP.

The invention, in its second aspect, may comprise one or more features of the first aspect of the invention.

In accordance with a third aspect of the present invention, there is provided a method of selecting call attributes, during a call, whereby the quality of the call may be varied and whereby the cost of the call, to the relevant call party, is influenced or determined by the attributes so selected.

The invention, in its third aspect, may comprise one or more of the features of the first and second aspects of the invention.

In accordance with a fourth aspect of the present invention, there is provided a telecommunications system having network elements arranged so as to provide a user of the system with a choice of a plurality of call attributes, the elements including a call attribute element having a user/attribute data store whereby calls involving a particular user are made in accordance with that user's preferred call attributes.

The call attribute element may comprise a call attribute variation module whereby a user, during a call, is able to vary the attributes thereof.

The attributes may include call quality and/or cost rate.

The invention, in its fourth aspect, may comprise one or more of the features set out in the preceding paragraphs.

### Brief Description of the Drawings

Embodiments of the invention will now be described in greater detail, but strictly by way of example only, by reference to the accompanying drawings, of which:
Figure 1 is a schematic illustration showing a telecommunications system having multiple paths for voice traffic; and
Figure 2 is a more detailed schematic illustration of such a system.

### Best Mode of the Invention

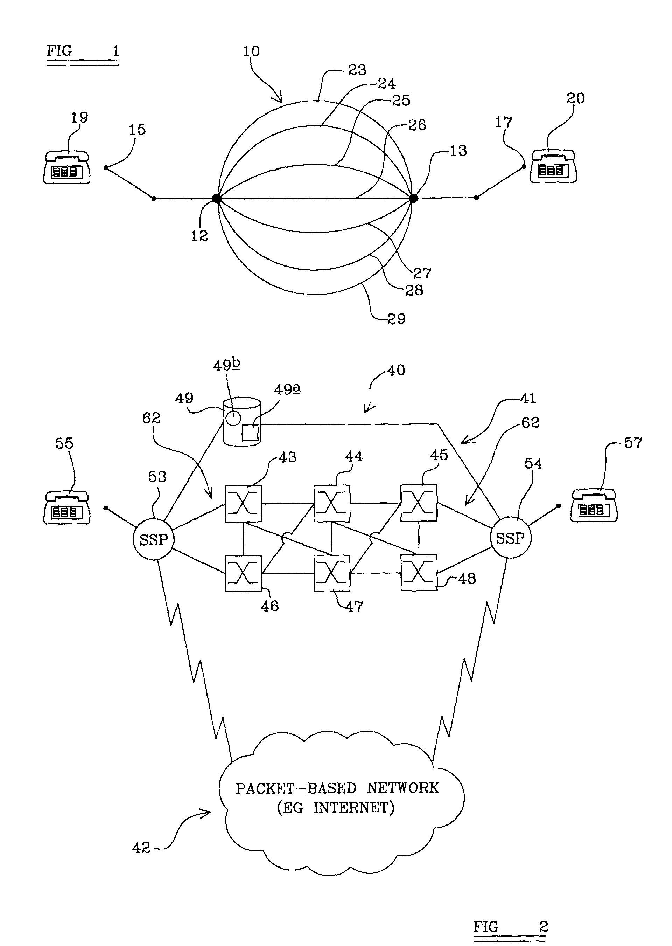

Referring first to Figure 1, this illustrates, in schematic form, a telecommunications system 10 having switching points 12 and 13, connected, in generally conventional manner, to telecommunications outlets 15 and 17, whereby a user may connect telephone equipment 19 and 20 to the network. Whilst telephone equipment 19 and 20 is illustrated in form of a conventional telephone handset, it will be understood that these may also be any other kind of end user equipment that can be connected to a telephone line and used to make a voice call.

Switching points 12 and 13 are connectable via a plurality of network arrangements 23 to 29, which themselves (in generally conventional form) comprise many individual network elements interconnected by various types of transmission links.

The purpose of Figure 1 is to illustrate that, when transmitting call data between signalling points 12 and 13, a number of transmission routes are available. For example, routes 23 to 26 may employ packet-based network elements, whereas routes 27, 28 and 29 may be provided using a range of switched (PSTN) network elements.

By issuance of appropriate commands to the switching points 12 and/or 13, a call made between the telephone 19 and the telephone 20 can be routed in a variety of different ways, and as will be described in more detail below, functionality is provided to the signalling points 12 and 13 that enables the connection route to be varied as the call is in progress thus affecting the QoS. It is important to realise, in addition, that the routes 23 to 29 serve to illustrate, in conceptual form, that different call attributes (such as quality) are available, and that such attributes are also variable in accordance with user commands.

Figure 2 illustrates this in more detail, and shows how call parties are able to vary call attributes in a telecommunications system having a range of different types of network elements.

In brief, Figure 2 shows a telecommunications system 40 having generally conventional PSTN functionality 41 and packet-based IP telephony functionality 42. The PSTN network 41 comprises a plurality of interconnected switches 43 to 48, a Service Control Point (SCP) 49, and Service Switching Point (SSP) capable central switches 53 and 54, to which are connected, respectively, telephones 55 and 57. It will be understood that the SSP capable switches 53 and 54 and the SCP 49 are interconnected by a separate signalling network (not shown). Whilst only a single SCP 49 is shown in Fig 2, it will be understood that practical embodiments would normally include a number of similarly configured SCP's within the signalling network. SSP capable switches 53 and 54 are connected to an IP network 42 via gateway routers in known manner.

From Figure 2, it can be seen that, when a call is made between the telephone 55 and telephone 57, a choice exists as to whether the call is routed over the PSTN network 41 or the packet-based IP telephony network 42. This choice may, for instance, be made during initiation of a call, by the SSP 53 forwarding a query to the SCP 49 to elicit a response that informs the SSP 53 of a user's preferred routing option. Using this information, the SSP is able to establish either a PSTN connection over voice trunks 62 or a connection via the IP network 42.

Providing a call routing option at the outset of call initialisation is known in itself, as the use of certain dialling codes can be employed to route international calls via third party networks, for example. However, this invention provides a system and method whereby call parties may vary call attributes as the call is in progress.

To this end, the SCP comprises or is associated with a call attribute variation element 49a. In this example, call attribute variation element 49a takes the form of suitable service logic executed within the SCP 49, which is operative to vary the attributes of the call as it is in progress. Specifically, the SSP's 53 and 54 are able to detect tones/commands generated during a call using the telephones 55/57 and/or computers 56/58 and are operative to report such "mid-call events" to an appropriate SCP (in the illustrative example SCP 49) that employs attribute variation logic in the call attribute variation elements to control the SSP's and switches to vary the call attributes, in the manner requested. The ability to vary the attributes may be provided to the caller or to a callee or to them both. However, in most practical embodiments it may be preferable to confine this facility to the party that is being billed for the call, and usually this is the caller.

In a particularly preferred embodiment, the SSP's may be responsive to DTMF tones generated using (or emulated by) the telephones and/or computers, in a manner akin to the operation of automated switchboards, voice mail systems and the like. Thus, in response, for example, to a call party pressing a button on their telephone handset (or generating the corresponding DTMF tone using their computer) the SCP determines an alternative connection path between the SSP's 53 and 54, with the choice of path being determined by SCP 49 in accordance with the command supplied by the call party. Thus, where pressing "1" on a telephone keypad indicates that a call party wishes to increase the quality of the call, SCP 49 may identify a less congested connection path than that currently being used to sustain the call, and may re-route the call to use an IP connection having a greater degree of QoS control functionality. To enable congestion to be determined (i.e. for the available bandwidth of the network elements to be monitored), use may be made of information that may be available at the SCP from internal network monitoring facilities conventionally provided within such networks.

Should a call party indicate (perhaps by pressing "2" on a telephone handset) that a lower quality of call is acceptable, the reverse can be brought about, again using the call attribute variation elements 49a.

In this case, however, the call may be re-routed via more heavily congested switches, freeing up the previously used switches for high quality call connections which may be requested by other call parties. This could also be brought about by, for instance, opting for a lower degree of control over the IP link 42. In order to compensate the call parties for the provision of lower quality calls and in order to charge call parties for higher quality calls, a billing element 49b is provided in or in association with the SCP 49. Thus, when a call attribute variation element 49a receives a request from a call party to vary the quality level of a call in progress, billing element 49b is provided with appropriate corresponding billing instructions whereby the cost of the call is modified accordingly.

It will also be appreciated from the drawings that, if so instructed, the SCP 49 can effect re-routing of a PSTN based call via a packet-based network, and vice versa. The relative advantages and disadvantages of both networks are well known (and are discussed earlier in this specification) but the invention provides a means by which call parties may alter the nature of the call connection in this way, as the call is in progress.

It is also envisaged that default call attributes may be defined in subscriber and other databases accessible by the SCP 49, whereby user/call attribute data may be stored, and acted upon in the event that a particular user initiates a call using the network. Thus, a particular user may decide that, on most occasions, the level of call quality provided by a packet-based IP telephony network is sufficient, with this indication being given to the network provider when a subscription package is agreed, for example. This information is then stored within an appropriate SCP. Thus, when a call is initiated by that user, relevant call information will be used by the SCP (in conventional manner) with the SCP being effective to inform the user's local SSP (and the destination SSP) of the preferred signalling configuration. Of course, at any time subsequent to initiation of the call, either the caller or the callee can change the call attributes in the manner described above, thus giving the call parties a great degree of flexibility over the quality of the calls made, which hitherto has not been possible.

As will be appreciated from the foregoing, the invention provides a highly versatile telecommunications system and method whereby telecommunications users are able to vary a number of characteristics of a call as the call is in progress. This enables calls that require a high degree of quality to be selectively established using a high quality connection, but enables users who are not so concerned to make use of lower quality - but cheaper - call connection routes whilst having the ability to switch mid-call to a higher quality connection if the call quality actually experienced becomes unacceptable.

It will also be well understood that the PSTN and IP networks shown are purely exemplary and arc intended to show one way in which call quality can be varied as the call is in progress. Thus, it will be appreciated that the examples are intended to illustrate a specific subset of the general inventive concept, and many other networks could thus be employed within the broad spirit of the present invention.

In other embodiments, other types of call attributes may be varied in the above described manner. For instance, a plurality of different or differently configured IP telephony network elements may be provided, whereby different network performance levels may be selected by the user. Alternatively or in addition, the quality of the call may be varied by adopting, selectively, one or more switching specifications. Similarly, the quality may be varied by controlling the routers in the IP networks, for example by taking advantage of MLPS or other protocols that allow more detailed control of routing decisions than in a simple IP network. Multi Protocol Label Switching (MPLS) may thus be adopted where a relatively high quality call is required. Conveniently, therefore, different "QoS" (Quality of Service) levels may be selected by the user.

In the present specification "comprises" means "includes or consists of and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A telecommunications system having network elements arranged so as to provide a user of the system with a choice of a plurality of call attributes, the elements including a call attribute variation element whereby the user, during a call, is able to vary the attributes thereof.

2. A system according to Claim 1 wherein the call attribute variation element is operative, in response to a user command, to vary the quality of the call, as perceived by a party to the call.

3. A system according to Claim 2 wherein the quality is varied by re-routing the call.

4. A system according to Claim 1, Claim 2 or Claim 3 comprising a network monitoring arrangement operative to monitor the quality of service being provided by at least some of the network elements and wherein the call attribute variation element is operative to re-route a call according to the output of the network monitoring arrangement.

5. A system according to Claim 2, Claim 3 or Claim 4 wherein the quality is varied by changing the number of switches that are used to connect the call parties.

6. A system according to any one of Claims 2 to 5 wherein the quality is varied by changing the nature of the transmission links that are used to connect the call parties.

7. A system according to any one of the preceding claims wherein the attributes are varied by selectively employing packet-based or switched network elements for all or part of the call route.

8. A system according to Claim 7 wherein the packet-based network elements are IP telephony network elements.

9. A system according to Claim 8 wherein a plurality of different or differently configured IP telephony network elements are provided, whereby different performance levels may be selected by the user.

10. A system according to Claim 9 wherein different "QoS" (Quality of Service) levels may be selected by the user.

11. A system according to Claim 10 wherein the QoS levels are determined and/or measured using call characteristics such as the rate of data transmission, transmission error occurrence, error connection levels, network latency, jitter and packet order integrity.

12. A system according to any one of the preceding claims further comprising a billing element operative to bill users for calls made using the network, wherein the call attribute variation element, in response to a user command, causes information relating to the call attribute selection to be conveyed to the billing element.

13. A system according to any one of the preceding claims wherein the variation of the attributes is effected by generating instruction signals and transmitting the signals towards the call attribute variation clement.

14. A system according to Claim 13 wherein the instruction signals are audio signals.

15. A system according to Claim 13 or Claim 14 wherein the instruction signals are DTMF tones.

16. A system according to any one of the preceding claims wherein the attributes may be varied by the caller and/or a callee.

17. A telecommunications system having both packed-based and switched network elements and a call attribute variation element whereby a user of the system, during a call, may vary the attributes of the call by causing the system to use the packet-based or switched network elements to route the call, as appropriate.

18. A system according to Claim 17 wherein the call attribute variation element is responsive to audio signals generated by the user, or generated in accordance with user actions.

19. A system according to Claim 18 wherein the audio signals are DTMF tones.

20. A system according to Claim 17, Claim 18 or Claim 19 wherein the attributes may be varied by the caller and/or a callee.

21. A system according to any one of Claims 17 to 20 wherein the network uses SS7 network signalling and wherein user commands are dispatched to a SCP (Service Control Point).

22. A system according to Claim 21 wherein the call attribute variation element is provided by service logic executed by the SCP.

23. A system according to Claim 21 or Claim 22 wherein a billing element is provided by or associated with the SCP.

24. A method of selecting call attributes, during a call, whereby the quality of the call may be varied and whereby the cost of the call, to the relevant call party, is influenced or determined by the attributes so selected.

25. A method according to Claim 24 wherein the attributes may be selected by the caller and/or a callee.

26. A telecommunications system having network elements arranged so as to provide a user of the system with a choice of a plurality of call attributes, the elements including a call attribute element having a user/attribute data store whereby calls involving a particular user are made in accordance with that user's preferred call attributes.

27. A system according to Claim 26 wherein the call attribute element comprises a call attribute variation module whereby a user, during a call, is able to vary the attributes thereof.

28. A system according to Claim 26 or Claim 27 wherein the attributes include call quality and/or cost rate.
